# EUROPEAN PATENT APPLICATION

(11) **EP 4 328 821 A1**
(43) Date of publication of application: **28.02.2024**
(21) Application number: 23185587.5
(22) Date of filing: 14.07.2023
(51) Int. Cl.: G06Q 10/0631

(54) **METHOD AND DEVICE FOR CITY MANAGEMENT SUPPORT**

(30) Priority: 23.08.2022 JP 2022132543
(71) Applicant: TOYOTA JIDOSHA KABUSHIKI KAISHA, Toyota-shi, Aichi-ken, 471 8571 (JP)
(72) Inventor: OISHI, Kota, Tokyo, 103-0022 (JP)
(74) Representative: TBK

(57) **Abstract**

A city management support method comprises the steps of: obtaining service relevant data (SRV) to perform a future supply forecast for one or more services; obtaining person relevant data (PSN) to perform a future demand forecast for the one or more services; associating supply forecast data (SRV*(LC, TM)) with demand forecast data (PSN*(LC, TM)) by using at least one of data and time data as a parameter; generating feedback data for service provider (RCM_PR) and feedback data for person (RCM_PS) based on the associated dataset; and transmitting the feedback data for service provider to a terminal (20) of a service provider and transmitting the feedback data for person to a terminal (30) of a person.

## Description

### TECHNICAL FIELD

The present disclosure relates to a method, a device, and a non-transitory computer-readable storage medium for supporting city management in which one or more services by one or more service providers are provided to one or more persons.

### BACKGROUND

JP2003-114135A discloses a method for providing geographic information. This related art provides a user with map information on an area where the user is planning to visit. In this related art, additional information to be provided to the user together with the map information is generated. The additional information is generated based on input information such as a destination to be visited by the user, a time zone in which the user visits the destination, and preferences of the user, and real-time information on the area including the destination.

In addition to JP2003-114135A, JP2021-093088A can be cited as examples of documents showing the art related to the present disclosure.

### SUMMARY

In the related art, information used for generating the additional information is various kinds of input information by the user, information obtained in real time (real-time data), or the like. Therefore, it can be said that the user has a merit of obtaining the additional information as a consideration for various input information and/or a consideration for the time and effort of providing the various input information.

Consider a case where real-time data is actively provided in the related art. In this case, an information provider of the real-time data only provides the data unilaterally and has less merit than the user. Therefore, it is desired to construct a system which is advantageous to all information providers who actively provide data.

It is an object of the present disclosure to provide a system that benefits all information providers who actively provide data.

A first aspect of the present disclosure is a method for supporting city management in which one or more services provided by one or more service providers are provided to one or more persons, and has the following features. The method comprises the steps of:
obtaining service relevant data indicating data generated in relation to the one or more services;
organizing the service relevant data based on at least one of location data and time data included in the service relevant data;
performing a future supply forecast for the one or more services by the one or more service providers based on the organized service relevant data;
obtaining person relevant data indicating data generated in relation to the one or more persons;
organizing the person relevant data based on at least one of location data and time data included in the person relevant data;
performing a future demand forecast for the one or more services by the one or more persons based on the organized person relevant data;
associating supply forecast data indicating data of the future supply forecast with demand forecast data indicating data of the future demand forecast by using at least one of data and time data as a parameter;
generating feedback data for service provider and feedback data for person based on a dataset including the supply forecast data and the demand forecast data that are associated with each other; and
transmitting the feedback data for service provider to one or more terminals of the one or more service providers and transmitting the feedback data for person to one or more terminals of the one or more persons.

A second aspect of the present disclosure is a device for supporting city management in which one or more services provided by one or more service providers are provided to one or more persons, and has the following features.

The device comprises a data processing device.

The data processing device is configured to execute:
processing to obtain service relevant data indicating data generated in association with the one or more services;
processing to organize the service relevant data based on at least one data of location and time included in the service relevant data;
processing to perform a future supply forecast for the one or more services by the one or more service providers based on the organized service relevant data;
processing to obtain person relevant data indicating data generated in relation to the one or more persons;
processing to organize the person relevant data based on at least one data of location and time included in the person relevant data;
processing to perform a future demand forecast for the one or more services by the one or more persons based on the organized person relevant data;
processing to associate supply forecast data indicating data of the future supply forecast with demand forecast data indicating data of the future demand forecast by using at least one of data and time data as a parameter;
processing to generate feedback data for service provider and feedback data for person based on a dataset including the supply forecast data and the demand forecast data that are associated with each other; and
processing to transmit the feedback data for service provider to one or more terminals of the one or more service providers and to transmit the feedback data for person to one or more terminals of the one or more persons.

According to the present disclosure, the feedback data for one or more service providers are provided to the one or more service providers who have provided service relevant data. In addition, the feedback data for one or more persons are provided to the one or more persons who have provided the person relevant data. Therefore, all the information providers who have actively provided data in the city can receive a benefit of the information provision.

### BRIEF DESCRIPTION OF THE DRAWINGS

Figure 1 is a diagram showing an outline of city;
Figure 2 is a diagram for explaining a configuration example of service relevant data;
Figure 3 is a diagram for explaining an example of generation of point of sales data;
Figure 4 is a diagram for explaining another configuration example of the service relevant data;
Figure 5 is a diagram for explaining another example of generation of the point of sales data;
Figure 6 is a diagram for explaining a configuration example of various data;
Figure 7 is a diagram for explaining a configuration example of person relevant data;
Figure 8 is a diagram for explaining an example management support processing flow that is particularly relevant to an embodiment;
Figure 9 is a diagram for explaining a configuration example of a city management support system including a management server; and
Figure 10 is a flow chart illustrating a flow of processing executed by a data processing device and particularly relevant to the embodiment.

### DESCRIPTION OF EMBODIMENT

An embodiment of the present disclosure will be described with reference to the drawings. In the drawings, the same or corresponding parts are denoted by the same reference signs, and the description thereof will be simplified or omitted.

### 1. Outline of City

In the present disclosure, city CT means a physical space in which one or more service SRs are provided thereby one or more person PSs of life are served. There is no limitation on a size of the city CT in the present disclosure. A so-called smart city is an example of a large-scale city CT, an underground mall is an example of a medium-scale city CT, and a large building is an example of a small-scale city CT. A virtual space of an Internet, which is not the physical space, is not included in the city CT in the present disclosure. In the city CT, one or more service SRs are provided by one or more service provider PRs.

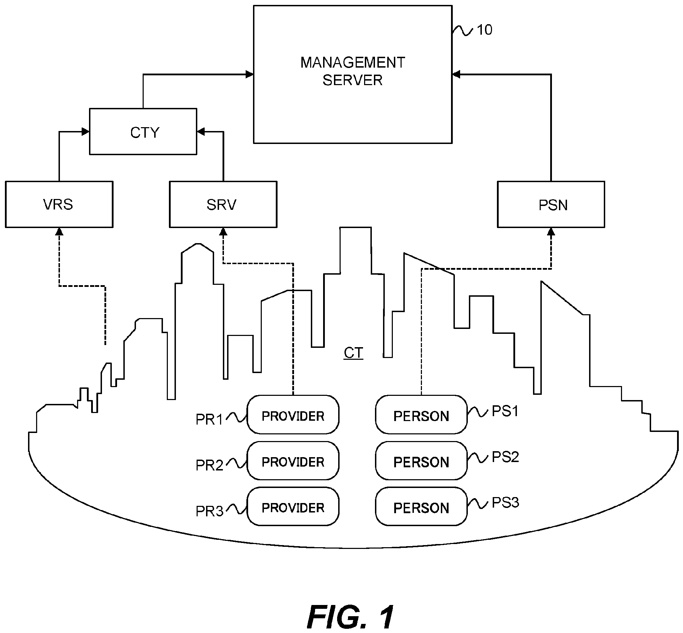

Figure 1 is a diagram showing an outline of the city CT. Figure 1 illustrates a service provider PR1 that provides service SR1, a service provider PR2 that provides service SR2, and a service provider PR3 that provides service SR3 in the city CT. The service providers PR1, PR2, and PR3 are examples of the one or more service provider PRs. The service providers PR1, PR2, and PR3 are a natural person or a corporation. Each business facility of these service providers is in at least one city CT.

The services SR1, SV2 and SV3 are examples of the one or more service SRs. The services SR1, SV2 and SV3 are not particularly limited, and an arbitrary service that can be provided in the city CT corresponds thereto. Examples of the arbitrary service includes a service directly or indirectly related to a business included in the major classification H "transportation business, postal business", the major classification M "lodging business, eating and drinking service business", and the major classification N "life-related service business, amusement business" disclosed in Japanese standard industry classification.

Figure 1 also illustrates person PS1, PS2 and PS3. The persons PS1, PS2, and PS3 are examples of the one or more person PSs. The persons PS1, PS2, and PS3 are all natural person. The persons PS1, PS2 and PS3 may or may not be inhabited by the city CT. Examples of the person in the latter case include a visitor who temporarily stays in the city CT, and a passer-by who temporarily enters or leaves the city CT on the way to a destination other than the city CT. The persons PS1, PS2, and PS3 use at least one service of the services SR1, SV2, and SV3 as needed, or do not use any service.

Figure 1 also illustrates a management server 10 as a city management support device according to the embodiment. The management server 10 actively or passively collections city relevant data CTY and person relevant data PSN to assist a management in the city CT. The management server 10 also executes processing for supporting the management in the city CT (hereinafter also referred to as "management support processing") based on the collected city relevant data CTY and person relevant data PSN. The city relevant data CTY, the person relevant data PSN, and the management support processing will be described below.

### 2. City relevant data CTY

The city relevant data CTY is generated in relation to the city CT. The city relevant data CTY includes service relevant data SRV and various data VRS other than the service relevant data SRV.

### 2-1. Service relevant data SRV

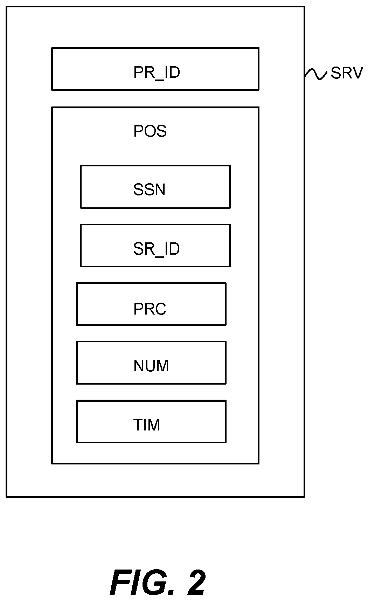

The service relevant data SRV indicates data generated in relation to the one or more service SRs. Figure 2 is a diagram illustrating a configuration example of a service relevant data SRV. In the example shown in Figure 2, the service relevant data SRV includes service provider ID data PR_ID. For example, the service provider ID data PR_ID is assigned to the one or more service provider PRs, respectively. Preferably, the service provider ID data PR_ID is assigned to each business facility (store) of the one or more service provider PRs. When the service provider ID data PR_ID is assigned to each business facility, a location (e.g., latitude, longitude, floor information, and the like) of the business facility in which the service relevant data SRV is generated can be specified.

In the example shown in Figure 2, the service relevant data SRV also includes the point of sales data POS. The point of sales data POS specifies a service provided to the one or more person PSs, a commodity sold to the one or more person PSs, and the like. In the example shown in Figure 2, the point of sales data POS includes serial number data SSN, service ID data SR_ID, price data PRC, number data NUM, and time data TIM.

The serial number data SSN is assigned every time at which the point of sales data POS is generated. The service ID data SR_ID identifies a type of the service provided to the one or more person PSs and the commodity sold to the one or more person PSs. The price data PRC and the number data NUM are data attached to the service ID data SR_ID. The two kinds of data are given on a unit-by-unit basis with the provided service, the sold product, or the like as one unit. The time data TIM indicates the time at which the point of sales data POS is generated. The time data TIM may specify a time when the service relevant data SRV is generated.

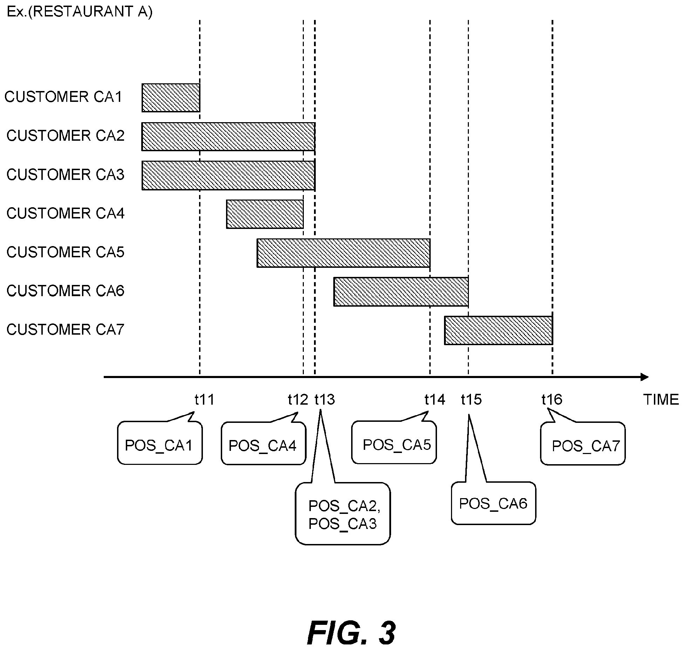

An example of generating the point of sales data POS described in Figure 2 will be described with reference to Figure 3. In the example shown in Figure 3, the business facility of the service provider PR is a restaurant A, and the eating and drinking service is provided by this service provider PR. Time widths shown in Figure 3 represent respective time zone during which customers CA1 to CA7 stayed. In this example, the point of sales data POS_CA1 to POS_CA7 is generated at each time (t11 to t16) immediately before each of the customers CA1 to CA7 leaves the restaurant A. An example of the time immediately before leaving the restaurant A is a time at which a price for the eating and drinking service is paid.

The time widths shown in Figure 3 can be grasped by specifying, for example, each time when each of the customers CA1 to CA7 entered the restaurant A and each time when each of the customers CA1 to CA7 exited the restaurant A. For example, images outside and inside of the restaurant A are acquired from cameras installed outside and inside the restaurant A. Then, person identification processing using the camera image is performed. Accordingly, when a certain customer CA pays the price for the customer CA service, the time at which the same person as the food enters the restaurant A is specified. Further, according to the person identification processing, after the certain customer CA has paid the price for the customer CA service, the time at which the same person leaves the restaurant A is specified.

When the time widths shown in Figure 3 is specified, the stay times of the customers CA1 to CA7 may be added to the point of sales data POS. The respective stay times of the customers CA1 to CA7 can be said to be respective utilization time zones of the food and drink services of the customers CA1 to CA7.

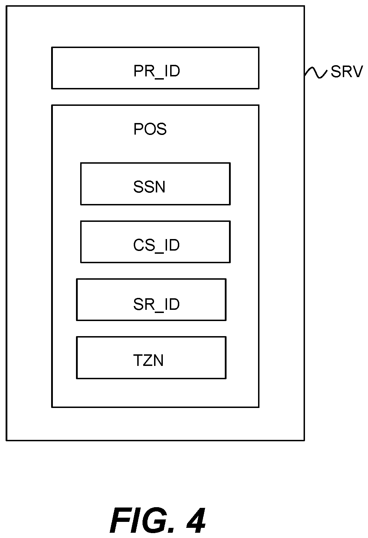

Figure 4 is a diagram illustrating another configuration example of the service relevant data SRV. In the example shown in Figure 4, the service relevant data SRV includes the service provider ID data PR_ID and the point of sales data POS. The service provider ID data PR_ID is as described with reference to Figure 2. In the example illustrated in Figure 4, the point of sales data POS includes serial number data SSN, customer ID data CS_ID, service ID data SR_ID, and time zone of use data TZN. The serial number data SSN and the service ID data SR_ID are as described with reference to Figure 2.

The customer ID data CS_ID is included in the point of sales data POS when a customer is specified by information such as a service provision target or a merchandise sales target. The customer ID data CS_ID is typically assigned by the one or more service provider PRs uniquely. The customer ID data CS_ID is set for each business facility of the one or more service provider PRs, for example. The time zone of use data TZN is a time zone during which a customer specified by the customer ID data CS_ID used the service SR provided by a service provider PR specified by the service provider ID data PR_ID.

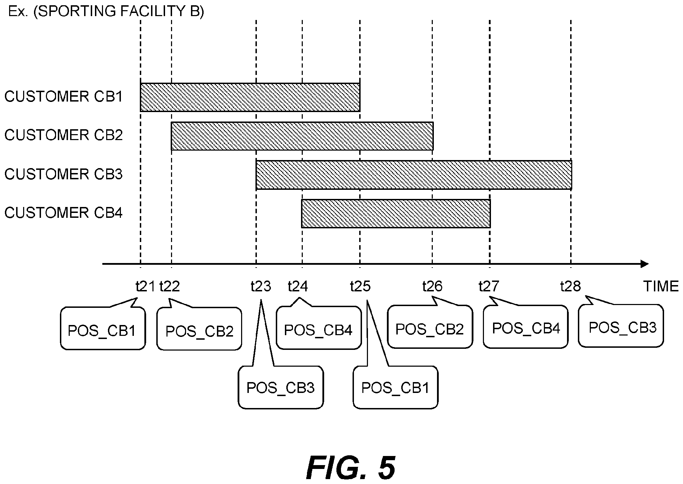

An example of generating the point of sales data POS described in Figure 4 will be described with reference to Figure 5. In the example shown in Figure 5, the business facility of the service provider PR is a sporting facility B, and various services in the sporting facility are provided by this service provider PR. In this example, each of the points of sales data POS_CB1 to POS_CB4 is generated by combining the date acquired at each time point (t21 to t24) when the customers CB1 to CB4 enter the sporting facility B and the date acquired at each time point (t25 to t28) at which these customers leave the sporting facility B. The data of time at which each of the customers CB1 to CB4 entered or left the sporting facility B is used to specify the time at which the service relevant data SRV is generated.

The width of time illustrated in Figure 5 represents the width of use time (i.e., a use time zone) of various services used by the customers CB1 to CB4. These time widths can be generated by specifying the time at which each of the customers CB1 to CB4 enters the sporting facility B and the time at which each of the customers CB1 to CB4 leaves the sporting facility B. These times are specified by, for example, recognition processing using an IC-card reader installed at an entrance of the sporting facility B. These times may be identified by the person identification processing described above.

### 2-2. Various data VRS

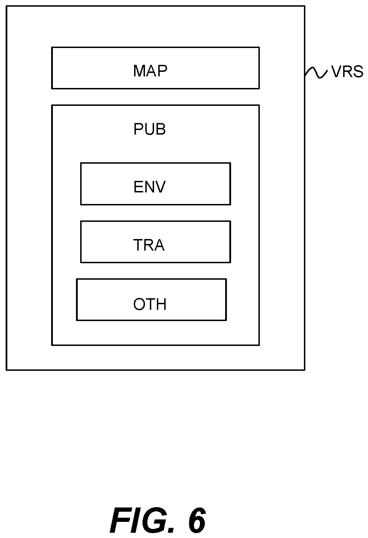

Figure 6 is a diagram illustrating a configuration example of the various data VRS. In the example illustrated in Figure 6, various data VRS includes map data MAP and public data PUB.

The map data MAP includes specifications (e.g., type, size, latitude, longitude, and height of a central position or one or more representative positions) of artificial objects such as buildings, roads, and railways existing in the city CT, and the specifications of natural objects such as rivers, lakes, and marshes existing in the city CT.

The public data PUB is data related to the city CT and available to public (so-called open data). The public data PUB includes environmental data ENV such as weather, temperature, and moisture, traffic data TRA such as traffic volume and operation status of transportation facilities, and other data OTH such as administrative data and statistical data. When all the data constituting the map data MAP correspond to the above-described open data, the map data MAP may be included in the public data PUB.

The various data VRS includes at least one data of a location and a time (date and time). For example, in the map data MAP, the data of the center position included in the data relating to specifications corresponds to this location data. That is, the map data MAP includes the location data. The map data MAP may include time data corresponding to a content of data constituting the map data MAP. The environmental data ENV contains location data indicating where data configuring this environmental data ENV locates, as well as time data indicating at which this configuring data is. Like the environmental data ENV, the traffic data TRA also includes location data and time data. That is, the environmental data ENV includes location data and time data. The other data OTH includes at least location data. The other data OTH may include time data depending on the content of the consisting data.

### 3. Person relevant data PSN

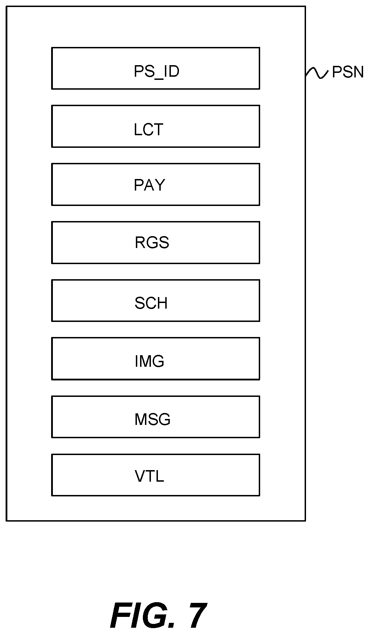

The person relevant data PSN is generated in relation to the person PS. Figure 7 is a diagram illustrating a configuration example of the person relevant data PSN. In the example shown in Fig. 7, the person relevant data PSN includes person ID data PS_ID, location data LCT, payment data PAY, service registration data RGS, schedule data SCH, image data IMG, message data MSG, and vital data VTL.

The person ID data PS_ID is assigned to each one or more person PSs. The person ID data PS_ID includes attribute data of the person PS (e.g., name, sex, age, family structure, etc.). The location data LCT indicates a history of locations of the person PS specified by the person ID data PS_ID. This location history is associated with a time of day. The payment data PAY indicates a history of payments made when the person PS specified by the person ID data PS_ID has paid the price for one or more service SRs. The payment data PAY is generated, for example, when the person PS performs electronic settlement. As with the location data LCT, the payment data PAY is associated with a time of day. Since the payment data PAY is associated with the time of day, it is possible to associate the payment data PAY with the location data LCT.

The person ID data PS_ID, the location data LCT and the payment data PAY are essential for the person relevant data PSN. On the other hand, the service registration data RGS, the schedule data SCH, the image data IMG, the message data MSG and the vital data VTL are arbitrarily included in the person relevant data PSN.

The service registration data RGS corresponds to customer ID data CS_ID assigned to the person PS specified by the person ID data PS_ID. The service registration data RGS is set for each business facility of the one or more service provider PRs, for example. The schedule data SCH relates to the schedule of the person PS specified by the person ID data PS_ID. The image data IMG is an image (e.g., a camera image) owned by the person PS specified by the person ID data PS_ID. The message data MSG is a message or the like created by the person PS specified by the person ID data PS_ID. These arbitrary data can be acquired from, for example, a terminal of the person PS specified by person ID data PS_ID.

The vital data VTL is biometric data such as pulse, blood pressure, respiration, and body temperature of the person PS specified by the person ID data PS_ID. The vital data VTL can be acquired from, for example, a wearable device of the person PS specified by the person ID data PS_ID.

The arbitrary data on the person relevant data PSN, such as the service registration data RGS, the vital data VTL, etc., includes at least one of location data and time data. For example, the service registration data RGS is set for each business facility of the one or more service provider PRs. Therefore, the service registration data RGS includes the location data of this business facility. When the destination of the person PS is included in the schedule data SCH, data of the destination is the location data included in the schedule data SCH, and time of stay at the destination is the time data included in the schedule data SCH.

The image data IMG and the message data MSG include at least time data. The time data included in the image data IMG is, for example, the time at which the image is acquired. The time data included in the message data MSG is, for example, the time at which the message is created or transmitted. The image data IMG and the message data MSG may include location data. The location at which the image is acquired can be referred to as location data included in the image data IMG. When the destination of the person PS is included in the message, the location of the destination may be referred to as the location data included in the message data MSG.

Like the image data IMG and the message data MSG, the vital data VTL includes at least time data. The time data included in the vital data VTL is, for example, the time at which the biometric data is acquired. The vital data VTL may include location data.
When the biometric data includes the acquired location, the location may be referred to as the location data included in the vital data VTL.

### 4. Management support processing by Management server 10

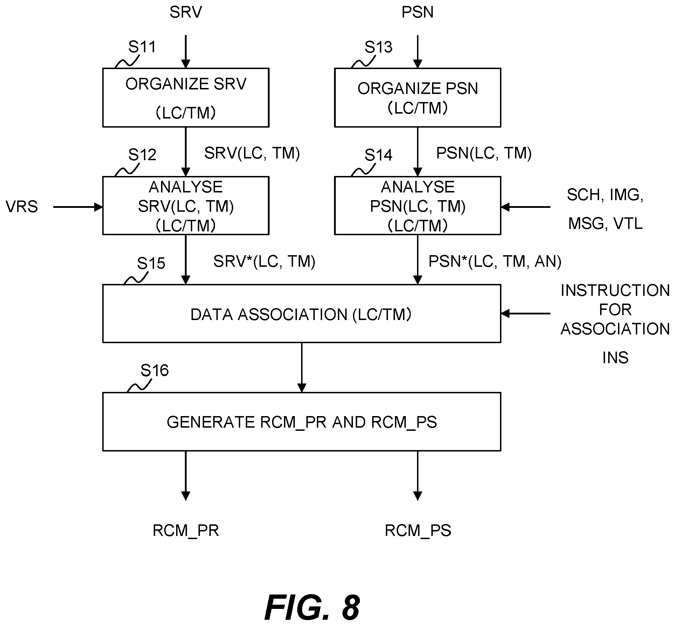

Figure 8 is a diagram illustrating an example management support processing flow that is particularly relevant to the embodiment. In the example illustrated in Fig. 8, processing to generate recommendation data RCM_PR for one or more service provider PRs and recommendation data RCM_PS for one or more person PSs is performed based on the service relevant data SRV and the person relevant data PSN. The recommendation data RCM _PR is an example of the "feedback data for service provider" in the present disclosure, and the recommendation data RCM_PS is an example of the "feedback data for person" in the present disclosure.

In the example shown in Figure 8, data organization of the service relevant data SRV is executed (step S 11). In step S 11, the service relevant data SRV is organized based on at least one data of location LC and time (date and time) TM. As described in the description of Figure 2, when the service provider ID data PR_ID is assigned to each business facility of the service provider PR, the location of the business facility where the service relevant data SRV is generated is specified. In the example shown in Figure 2, the time data TIM is included in the service relevant data SRV. In the example of Figure 4, the time at which the service relevant data SRV is generated is specified by the date of the time used to generate the time zone of use data TZN.

Accordingly, the service relevant data SRV may be arranged based on at least one data of the location LC and the time TM. Hereinafter, for convenience of description, the organized service relevant data SRV is referred to as "organized data SRV (LC, TM)".

Following the processing of step S 11, analysis of the organized data SRV (LC, TM) is executed (step S12). Examples of the analysis of the organized data SRV (LC, TM) include past analysis, current analysis, and future analysis of the organized data SRV (LC, TM). According to past analysis, a generation tendency of the organized data SRV (LC, TM) in the past is grasped. According to the current analysis, a real-time generation tendency of the organized data SRV (LC, TM) is grasped.

In past analysis or current analysis, various data VRS in which the organized data SRV (LC, TM) and at least one data of the location LC and the time TM are common can be appropriately used. This is because such various data VRS is considered to be an external factor that may affect the generation of the service relevant data SRV. For example, the map data MAP can be used to take into account geographic factors that affect the generation of the service relevant data SRV. By using the environmental data ENV, it is possible to take into account environmental factors that affect the generation of the service relevant data SRV. By using the traffic data TRA, it is possible to consider traffic factors that affect the generation of the service relevant data SRV.

The future analysis is performed using, for example, a prediction logic (prediction model) to which the result of the past analysis or the current analysis is input. According to the future analysis, a future generation tendency of the service relevant data SRV when attention is focused on at least one data of the location LC and the time TM is predicted. That is, according to the future analysis, the future supply prospects of the service SR by the service provider PR specified by the service provider ID data PR_ID is predicted. When the service provider ID data PR_ID is assigned to each business facility of the service provider PR, the future supply prospects of the service SR provided in this business facility is predicted.

Such a prediction of the supply prospects is possible when the past analysis or the current analysis of the organized data SRV (LC, TM) is performed focusing on the location LC. On the other hand, when the past analysis or the current analysis of the organized data SRV (LC, TM) is performed by focusing on the time TM, the service provider PR and the business facility thereof cannot be specified even if the future analysis is performed. However, according to the future analysis in this case, the supply prospects in the future of the service SR specified by the service ID data SR_ID is predicted. In addition, it is also possible to predict the time (date and time) when the supply of the service SR is expected.

When the past analysis or the current analysis of the organized data SRV (LC, TM) is performed by focusing on both the location LC and the time TM, the future supply prospects of the service SR specified by the service ID data SR_ID in the service SR provided by the service provider PR specified by the service provider ID data PR_ID is predicted by performing the above-described future analysis. It is also possible to predict the time when the supply of service SR is expected.

When the various data VRS having the same organized data SRV (LC, TM) and at least one data of the location LC and the time TM is used in the past analysis or the current analysis, a predicted value of the various data VRS is desirably used as an input of the prediction logic (prediction model) used in future analysis. Hereinafter, for convenience of explanation, the service SR supply prospects obtained by the future analysis will be referred to as "supply forecast data SRV*(LC, TM)".

In the example shown in Figure 8, data organization of the person relevant data PSN is also executed (step S13). In the same manner as the processing of step S11, in the processing of step S13, the person relevant data PSN is organized based on at least one data of the location LC and the time TM. As described in the description of Figure 7, the person relevant data PSN includes the location data LCT and the payment data PAY, each of which is associated with the time. As such, the payment data PAY having a time in common with the time associated with the location data LCT is associated with location data LCT. Thus, the person relevant data PSN can be organized based on both the location LC and the time TM. Hereinafter, for convenience of description, the organized person relevant data PSN is referred to as "organized data PSN (LC, TM)".

Following the processing of step S13, analysis of the organized data PSN (LC, TM) is executed (step S14). The analysis of the organized data PSN (LC, TM) is executed by focusing on a single person ID data PS_ID and is executed using feature analysis logic (feature analysis model). The feature analysis logic is set in advance in accordance with information to be output from the feature analysis logic (hereinafter also referred to as "result of the feature analysis AN").

The result of the feature analysis AN includes the results of the future analysis of the person PS. The future analysis of the person PS is executed using a result of the past analysis or the current analysis focusing on the single person ID data PS_ID. The result of the future analysis of the person PS corresponds to demand prospects of the service SR by this person PS. The result of the feature analysis AN also includes person PS behavior trends (e.g., active, social, adventure, impulsive, etc.), person PS judgment trends for the service SR (price-sensitive, environment-sensitive, etc.), health, and recommended nutrients for the person PS.

When the result of the feature analysis AN is obtained, the result of the feature analysis AN is added to the organized data PSN (LC, TM) input to the feature analysis logic when the result of the feature analysis AN is output. In the result of the feature analysis AN, in addition to the demand prospects in the future of the service SR by the person PS, the behavior trends of the person PS are included. Therefore, for convenience of description, the organized data PSN (LC, TM) to which the result of the feature analysis AN is added is hereinafter also referred to as "demand forecast data PSN*(LC, TM, AN)".

The processing of steps S11 to S14 is repeatedly executed at a predetermined processing cycle. Therefore, the supply forecast data SRV*(LC, TM) and the demand forecast data PSN*(LC, TM, AN) continue to be updated in this processing cycle.

Following the processing of step S12 or S14, data-associating processing is executed (step S15). The processing of step S15 is executed when the management server 10 receives an instruction for association INS. For example, the instruction for association INS is automatically transmitted to the management server 10 every time a predetermined period (e.g., 12 hours or 24 hours) elapses. The instruction for association INS may be transmitted to the management server 10 based on a request for association from the service provider PR or the person PS.

In the processing of step S15, latest supply forecast data SRV*(LC, TM) and latest demand forecast data PSN*(LC, TM, AN) are associated with each other. This association is done using at least one data of the location LC and the time TM as a parameter.

The association using the location LC as the parameter is executed, for example, when a location LC that matches the location LC included in the demand forecast data PSN*(LC, TM, AN) is included in the supply forecast data SRV*(LC, TM). In this case, it is predicted that the person PS specified by the person ID data PS_ID used to generate the demand forecast data PSN*(LC, TM, AN) uses the service SR provided by the service provider PR included in the supply forecast data SRV*(LC, TM) at the location LC.

The association using the time TM as the parameter is executed, for example, when a time TM identical to the time TM included in the demand forecast data PSN*(LC, TM, AN) is included in the supply forecast data SRV*(LC, TM). In this case, it is predicted that the person PS specified by the person ID data PS_ID used to generate the demand forecast data PSN*(LC, TM, AN) will use the service SR provided by the service provider PR included in the supply forecast data SRV*(LC, TM) at the time TM.

The association using both data of the location LC and the time TM as the parameters is a combination of the two types of associations described above. In this case, it is predicted that the person PS specified by the person ID data PS_ID used to generate the demand forecast data PSN*(LC, TM, AN) uses the service SR provided by the service provider PR included in the supply forecast data SRV*(LC, TM) at the location LC and the time TM.

When the service registration data RGS is included in person relevant data PSN for the person PS specified by the person ID data PS_ID used to generate the demand forecast data PSN*(LC, TM, AN) and the customer ID data CS_ID corresponding to the service registration data RGS is included in the service relevant data SRV for the service provider PR specified by the service provider ID data PR_ID included in the supply forecast data SRV*(LC, TM), an accuracy of the above prediction increases.

Following the processing of step S15, the recommendation data RCM_PR and RCM_PS are generated (step S16). In the processing of step S16, the recommendation data RCM_PR for the service provider PR corresponding to the prediction result in the processing of step S15 is generated. In the processing of step S16, the recommendation data RCM_PS for the person PS corresponding to the prediction result in the processing of step S15 is generated.

In the processing of step S16, the recommendation data RCM_PR for an "another person PS" may be generated from the person PS corresponding to the prediction result in the processing of step S15. This "another person PS" is assumed to be a person PS of which the result of the feature analysis AN matches or is similar to the person PS corresponding to the prediction result in the processing of step S15. This is because such the another person PS has a high possibility that the person PS, the degree of health, and the recommended nutrient corresponding to the prediction result in the processing of step S15 are close to each other, and is expected to accept the recommendation data RCM_PR.

In the processing of step S16, when the recommendation data RCM_PR for the "another person PS" is generated, the recommendation data RCM_PR for an "another service provider PR" may be generated based on the recommendation data RCM_PR for the "another person PS". This is because the information of the service SR predicted to be used by the "another person PS" at the location LC or the time TM is highly likely to be useful information for the "another service provider PR". Note that the "another service provider PR" mentioned here is a service provider PR different from the service provider PR corresponding to the prediction result in the processing of step S15.

As described above, according to the embodiment, the recommendation data RCM_PR for the service provider PR who provided the service relevant data SRV to the management server 10 is generated. In addition, the recommendation data RCM_PS for the person PS who provided the person relevant data PSN to the management server 10 is generated. Therefore, all the information providers who have actively provided the information to the management server 10 can receive the benefit of the information provision.

### 5. Configuration example of City management support system

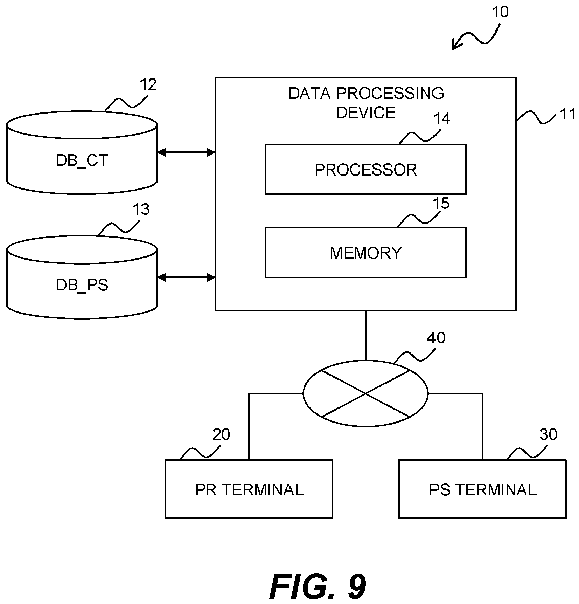

Figure 9 is a diagram illustrating an example of an overall configuration example of a city management support system including the management server 10. In the example illustrated in Figure 9, the city management support system includes a terminal of the service provider PR (hereinafter also referred to as a "PR terminal") 20 and a terminal of the person PS (hereinafter also referred to as a "PS terminal") 30 in addition to the management server 10. The PR terminal 20 and the PS terminal 30 communicate with the management server 10 via a communication network 40. The communication network 40 is not particularly limited, and a wired or wireless network can be used.

The management server 10 includes a data processing device 11 and databases (DBs) 12 and 13. The data processing device 11 includes at least one processor 14 and at least one memory 15. The processor 14 includes a CPU (Central Processing Units). The memory 15 is a volatile memory such as DDR memory, and expands various programs used by the processor 14 and temporarily stores various data. The various programs used by the processor 14 include a city management support program in which computer-readable storage medium according to the embodiment is stored. The various data used by the processor 14 include those stored in the databases 12 and 13.

The database 12 stores data related to the city CT. Examples of the date related to the city CT include the city relevant data CTY and various data derived therefrom. Examples of various data derived from the city relevant data CTY include data organized based on at least one data of the location LC and the time TM (i.e., the organized data SRV (LC, TM) and the supply forecast data SRV*(LC, TM)).

The database 13 stores data related to the person PS. Examples of the data related to the person PS include the person relevant data PSN and various data derived therefrom. Examples of the various data derived from the person relevant data PSN include data organized based on at least one data of the location LC and the time TM (i.e., the organized data PSN (LC, TM) and the demand forecast data PSN*(LC, TM, AN)).

The PR terminal 20 is installed, for example, in each business facility of the service provider PRs. The total number of the PR terminal 20 is at least one. In communication with the management server 10, the PR device 20 transmits the service relevant data SRV to the management server 10. The PR device 20 also receives the recommendation data RCM_PR from the management server 10.

The PS terminal 30 is, for example, a mobile terminal such as a smartphone and a tablet owned by the person PS. The total number of PS terminal 30 is at least one. In communication with the management server 10, the PS terminal 30 transmits the person relevant data PSN to the management server 10. The PS terminal 30 also receives the recommendation data RCM_PS from the management server 10.

### 6. Example of Data processing

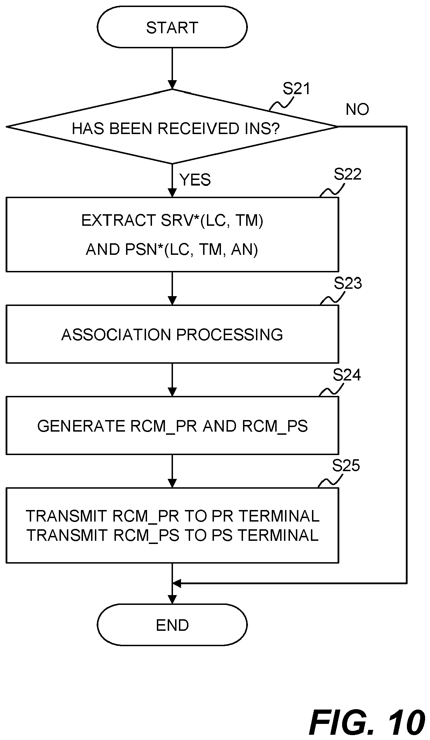

Figure 10 is a flow chart illustrating a flow of processing executed by the data processing device 11 (the processor 14) that is particularly relevant to the embodiment. The routine shown in Figure 10 is repeatedly executed, for example, at predetermined processing intervals.

In the routine shown in Figure 10, it is first determined whether the instruction for association INS has been received (step S21). As described above, the instruction for association INS is automatically transmitted to the management server 10 each time a predetermined period elapses. The instruction for association INS may be transmitted to the management server 10 based on the request for association from the service provider PR or the person PS.

If the judgement result of step S21 is positive, an extraction of the latest supply forecast data SRV*(LC, TM) and the latest demand forecast data PSN*(LC, TM, AN) is executed (step S22). The extraction of the latest supply forecast data SRV*(LC, TM) is done with reference to the database 12. The extraction of the latest demand forecast data PSN*(LC, TM, AN) is performed with reference to the database13.

Following the processing of step S22, association processing is executed (step S23). A target of the association processing is the data extracted in step S22. Details of the association processing are as described in step S15 of Figure 8.

Following the processing of step S23, the recommendation data RCM _PR and RCM_PS are generated (step S24). The details of the generation processing of the recommendation data RCM_PR and RCM_PS are as described in step S16 of Figure 8.

Following the processing of step S24, transmission of the recommendation data RCM_PR to the PR terminal 20 and the transmission of the recommendation data RCM_PS to the PS terminal 30 are executed (step S25). The recommendation data RCM_PR transmitted to the PR terminal 20 is generated in the processing of step S24. The recommendation data RCM_PS transmitted to the PS terminal 30 is generated in the processing of step S24.

A city management support method comprises the steps of: obtaining service relevant data (SRV) to perform a future supply forecast for one or more services; obtaining person relevant data (PSN) to perform a future demand forecast for the one or more services; associating supply forecast data (SRV*(LC, TM)) with demand forecast data (PSN*(LC, TM)) by using at least one of data and time data as a parameter; generating feedback data for service provider (RCM_PR) and feedback data for person (RCM_PS) based on the associated dataset; and transmitting the feedback data for service provider to a terminal (20) of a service provider and transmitting the feedback data for person to a terminal (30) of a person.

## Claims

1. A method for supporting city management in which one or more services provided by one or more service providers (PRs) are provided to one or more persons (PSs), **characterized in that** the method comprising the steps of:
obtaining service relevant data (SRV) indicating data generated in relation to the one or more services;
organizing the service relevant data (SRV (LC, TM)) based on at least one of location data and time data included in the service relevant data;
performing a future supply forecast for the one or more services by the one or more service providers based on the organized service relevant data;
obtaining person relevant data (PSN) indicating data generated in relation to the one or more persons;
organizing the person relevant data (PSN (LC, TM)) based on at least one of location data and time data included in the person relevant data;
performing a future demand forecast for the one or more services by the one or more persons based on the organized person relevant data;
associating supply forecast data (SRV*(LC, TM)) indicating data of the future supply forecast with demand forecast data (PSN*(LC, TM)) indicating data of the future demand forecast by using at least one of data and time data as a parameter;
generating feedback data for service provider (RCM_PR) and feedback data for person (RCM_PS) based on a dataset including the supply forecast data and the demand forecast data that are associated with each other; and
transmitting the feedback data for service provider to one or more terminals (20) of the one or more service providers and transmitting the feedback data for person to one or more terminals (30) of the one or more persons.

2. The method according to claim 1,
wherein the step of generating feedback data for service provider and for person comprises the steps of:
performing a future utilization forecast for the one or more services by a specific person among the one or more persons based on the dataset; and
specifying a service predicted to be used by the specific person in the future and at least one of a location and a time at which the service is predicted to be used, based on the utilization forecast data,
wherein the feedback data for person includes data of the specified service and data of at least one of the location and the time at which the specified service is used, and
wherein, in the step of transmitting the feedback data for service provider and for person, the feedback data for person is transmitted to a terminal of the specific person.

3. The method according to claim 2, wherein:
when the parameter is the location, the feedback data for person includes data of the location at which the specified service is available; and
when the parameter is the time, the feedback data for person includes data of the time during which the specified service is available.

4. The method according to claim 1 or 2,
wherein the step of generating the feedback data for service provider and for person comprises the steps of:
performing a future utilization forecast for the one or more services by a specific person among the one or more persons based on the dataset;
specifying a service predicted to be used by the specific person in the future and at least one of a location and a time at which the service is predicted to be used, based on the utilization forecast data; and
specifying, from among the one or more service providers, a service provider that provides the service predicted to be used by the specific person in the future,
wherein the feedback data for service provider includes data of the location at which the specified service is predicted to be used, and
wherein, in the step of transmitting the feedback data for person, the feedback data for service provider is transmitted to a terminal of the specified service provider.

5. The method according to claim 4, wherein
when the parameter is the location, the feedback data for service provider includes data of the location at which the specified service is predicted to be used and data of the specific person who is predicted to use the specified service, and
when the parameter is the time, the feedback data for service provider includes data of time at which the specified service is predicted to be used and data of the specific person who is predicted to use the specified service.

6. A device for supporting city management in which one or more services provided by one or more service providers (PRs) are provided to one or more persons (PSs), **characterized in that** the device comprising:
a data processing device (11),
wherein the data processing device is configured to execute:
processing to obtain service relevant data (SRV) indicating data generated in association with the one or more services;
processing to organize the service relevant data (SRV (LC, TM)) based on at least one data of location and time included in the service relevant data;
processing to perform a future supply forecast for the one or more services by the one or more service providers based on the organized service relevant data;
processing to obtain person relevant data (PSN) indicating data generated in relation to the one or more persons;
processing to organize the person relevant data (PSN (LC, TM)) based on at least one data of location and time included in the person relevant data;
processing to perform a future demand forecast for the one or more services by the one or more persons based on the organized person relevant data;
processing to associate supply forecast data (SRV*(LC, TM)) indicating data of the future supply forecast with demand forecast data (PSN*(LC, TM)) indicating data of the future demand forecast by using at least one of data and time data as a parameter;
processing to generate feedback data for service provider (RCM_PR) and feedback data for person (RCM_PS) based on a dataset including the supply forecast data and the demand forecast data that are associated with each other; and
processing to transmit the feedback data for service provider to one or more terminals (20) of the one or more service providers and to transmit the feedback data for person to one or more terminals (30) of the one or more persons.
